# EUROPÄISCHE PATENTSCHRIFT

(11) **EP 0 308 834 B1**
(45) Veröffentlichungstag und Bekanntmachung des Hinweises auf die Patenterteilung: **15.12.1993**
(21) Anmeldenummer: 88115278.9
(22) Anmeldetag: 17.09.1988
(51) Int. Cl.: G11B 21/10

(54) **Verfahren zur Spurführung bei einem Aufzeichnungsgerät**
Method for track following in a recording apparatus
Procédé de suivi de piste dans un appareil d'enregistrement

(30) Priorität: 25.09.1987 DE 3732278
(43) Veröffentlichungstag der Anmeldung: 29.03.1989
(73) Patentinhaber: Deutsche Thomson-Brandt GmbH, 78010 Villingen-Schwenningen (DE)
(72) Erfinder: Scholz, Werner, Dipl.-Ing., D-3007 Gehrden (DE)

(56) Entgegenhaltungen:
- DE-A- 3 114 451
- DE-A- 3 509 584
- DE-A- 3 517 380
- DE-A- 3 623 341
- IBM TECHNICAL DISCLOSURE BULLETIN, Band 22, Nr. 4, September 1979 E.W.PUGH "New format video recorder." Seiten 1714-1716

## Beschreibung

Für die Aufzeichnung von Signalen wie insbesondere digitalen Video- oder Audiosignalen ist ein Verfahren mit sogenannter matrixartiger Aufzeichnung bekannt (DE-A-35 17 380), bei dem auf dem Magnetband aufeinanderfolgende Blöcke mit jeweils zur Bandlänge kurzen und etwa parallel zur Bandkante verlaufenden Spuren geschrieben werden. Der Schreib- und Lesevorgang erfolgt mit einem rotierenden Kopfrad mit mehreren Köpfen, das durch eine Hubbewegung periodisch z.B. mit einer Frequenz von 0,5 Hz quer zur Bandrichtung hin und her bewegt wird. Bei einer derartigen Aufzeichnung ist es erforderlich, zusätzliche Maßnahmen vorzusehen, die insbesondere bei der Wiedergabe jeweils den Kopf genau entlang einer Spur führen. Derartige Maßnahmen sind allgemein als ATF (Automatic Track Following) bekannt. Sie arbeiten im allgemeinen mit einem zusätzlich aufgezeichneten Spurfindungs- oder Spurführungssignal, aus dem bei der Abtastung eine Stellgröße für die Lage der Köpfe gewonnen werden kann.

Für eine derartige matrixartige Aufzeichnung ist also in der DE-A-35 17 380 ein Verfahren zur Spurfindung auf bandförmigen Aufzeichnungsträgern mit einer Aufzeichnung der obengenannten Art beschrieben, bei dem während des Aufzeichnens eines Signales in einer der Spuren Kennsignale von einer oder mehreren vorher geschriebenen Spuren abgetastet werden, wobei die Kennsignale vorher geschriebener Spuren aus einem vorher geschriebenen Block stammen können.

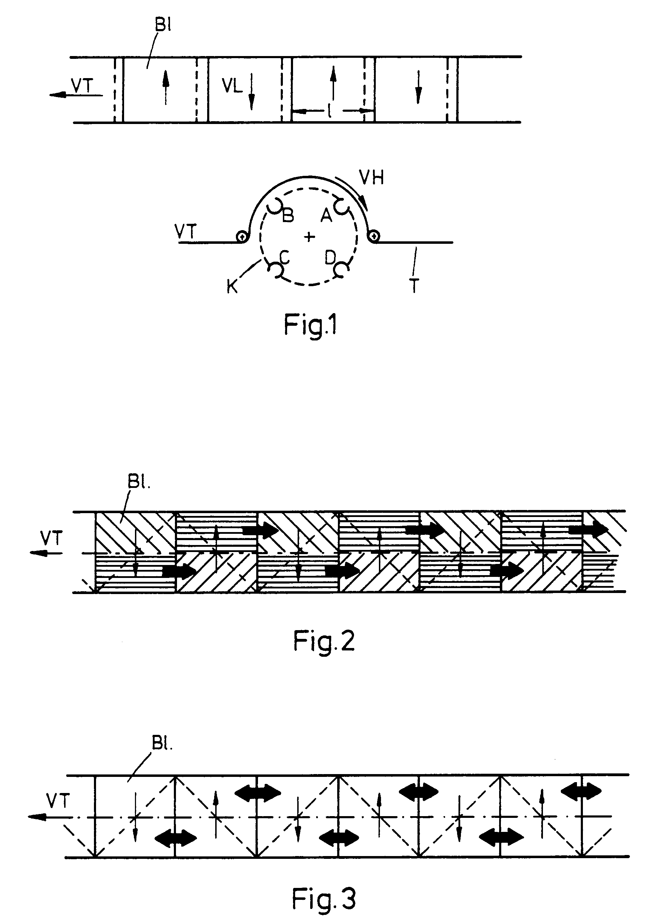

Fig. 1 zeigt einen bekannten Vorschlag für ein Spurführungsverfahren für die beschriebene matrixartige Aufzeichnung. Die aufgezeichneten Spurführungssignale befinden sich in den durch die gestrichelten Linien markierten Bereichen jeweils am Ende der Spuren eines Blockes Bl. Bereits bei der Aufzeichnung wird mit Hilfe dieser Informationen aus dem jeweils zuvor aufgezeichneten Block die für die Aufzeichnung erforderliche Hubbewegung so gesteuert, daß die Spuren aufeinanderfolgender Blöcke eine genau definierte Lage zueinander einnehmen. Durch zusätzliche Ausgleichsmaßnahmen muß verhindert werden, daß durch Summierung selbst kleinster Fehler im Laufe der Zeit Veränderungen des Aufzeichnungsmusters entstehen.

Der Erfindung liegt die Aufgabe zugrunde, für die beschriebene matrixartige Aufzeichnung ein vereinfachtes Verfahren für die Spurführung zu schaffen, bei dem keine Summierung der Fehler des Spurmusters über mehrere Blöcke auftritt, bzw. das keine speziellen aufgezeichneten Spurführungssignale benötigt.

Diese Aufgabe wird durch die im unabhängigen Anspruch 1 beschriebene Erfindung gelöst. Vorteilhafte Weiterbildungen der Erfindung sind in den abhängigen Ansprüchen beschrieben.

Bei der erfindungsgemäßen Lösung wird vermieden, daß sich Fehler in dem Spurmuster bei der Aufzeichnung über mehrere Blöcke addieren und unzulässig hohe Werte annehmen. Wenn die Spurführung aus dem Amplitudenverlauf (Einhüllende) des aus den Spuren eines Nachbarblockes abgetasteten Signals erfolgt, brauchen spezielle Signale für die Spurführung nicht mehr aufgezeichnet zu werden. Die Spurführung ist auch nicht mehr von der Amplitude eines aufgezeichneten Pilotsignals abhängig, wodurch in der Praxis leicht Störungen auftreten. Der zeitliche Verlauf der Einhüllenden kann bei den ersten Spuren eines Blockes verhältnismäßig früh ermittelt werden. Die Lage der Extremwerte kann z.B. durch Extrapolation abgeschätzt werden. Dadurch kann schon früh auf den Spurverlauf korrigierend eingewirkt werden. Bei der bekannten Lösung erfolgt die Regelung oder Steuerung für die richtige Spurführung aus dem Nachbarblock erst am Spurende, also dann, wenn die Spur bereits aufgezeichnet ist. Bei der erfindungsgemäßen Lösung werden somit Möglichkeiten ausgenutzt, die das Spurmuster gemäß der matrixartigen Aufzeichnung bietet, und dadurch eine einfachere und sicherere durchführbare Spurführung erreicht. Dadurch, daß keine zusätzlichen Signale für die Spurführung aufgezeichnet werden müssen, wird keine zusätzliche Übertragungskapazität in Form von Bandfläche oder zusätzlichen Frequenzbereiches benötigt.

Ein Ausführungsbeispeil der Erfindung wird im folgenden anhand der Zeichnung erläutert. Darin zeigen
- Fig. 2,3: im Prinzip die erfindungsgemäß Spurführung anhand der matrixartigen Aufzeichnung in Blöcken,
- Fig. 4: im Prinzip die Funktion der Spurführung und
- Fig. 5,6: die Anordnung der Spuren innerhalb eines Blockes für Sonderbetriebsarten mit abweichender Längsgeschwindigkeit des Magnetbandes.

Gemäß Fig. 2 erfolgt die Regelung der Hubbewegung für die Spurführung jeweils nur in dem Teil eines Blockes B, wo für eine möglichst lange Dauer die Spuren des zuvor aufgezeichneten Blockes für die Regelung der Hubbewegung verfügbar sind. Dieses ist durch die breiten Pfeile angedeutet. Der Bereich der mit Regelung aufgezeichneten Spuren ist durch die schräge Schraffur gekennzeichnet. Der Rest des Blockes B wird mit freilaufender Hubbewegung, d.h. mit einem möglichst konstanten, normgerechten Spurabstand aufgezeichnet, was durch die waagerechte Schraffur angedeutet ist.

Die gestrichelten Linien markieren den Beginn bzw. jeweils das Ende des Band/Kopf-Kontaktes. Diese Linien sind hier für einen Umschlingungswinkel von 180° gezeichnet. Die Lösung ist jedoch auch für von diesem Wert abweichende Umschlingungswinkel anwendbar.

Die gestrichelten Linien zeigen, daß die unmittelbar vor der Hubumkehr, also jeweils an den Aufzeichnungsrändern, aufgezeichneten Spuren fast mit ihrer vollen Länge für die Hubregelung im nächsten Block verfügbar sind, d.h. es besteht die Möglichkeit, die Spurführungsinformation wesentlich früher zu gewinnen als bei den bekannten Verfahren. Dadurch können durch Ungenauigkeiten des Hubumkehrvorganges hervorgerufene Abweichungen schnellstens korrigiert werden.

Fig. 3 zeigt das Abtastschema für eine gemäß Fig. 2 durchgeführte matrixartige Aufzeichnung. Beginn und Ende des Band/Kopf-Kontaktes sind wieder durch gestrichelte Linien gekennzeichnet. Die Spurregelung aus dem Nachbarblock erfolgt jeweils zwischen Spuren, die bei der Aufzeichnung durch Regelung verknüpft waren. Die Spurregelung erfolgt bei der Wiedergabe abwechselnd vom früher oder später aufgezeichneten Nachbarblock. Dieses wird durch die breiten Doppelpfeile symbolisiert. Dadurch ist immer ein langer Spurbereich für die Regelung verfügbar.

Die aus den Aufzeichnungsrändern, der Mittellinie und den Band/Kopf-Kontakt-Grenzen gebildeten Trapeze, in deren Zentrum sich die Doppelpfeile befinden, stellen die Bereiche dar, die für die Spurführung ausnutzbar sind, bzw. in denen eine Aufzeichnung von Spurführungssignalen sinnvoll ist.

Bei dem durch Fig. 2 und 3 beschriebenen Aufzeichnungsverfahren ist eine Hubregelung bzw. Spurführung auch ohne spezielle Spurführungssignale durchführbar.

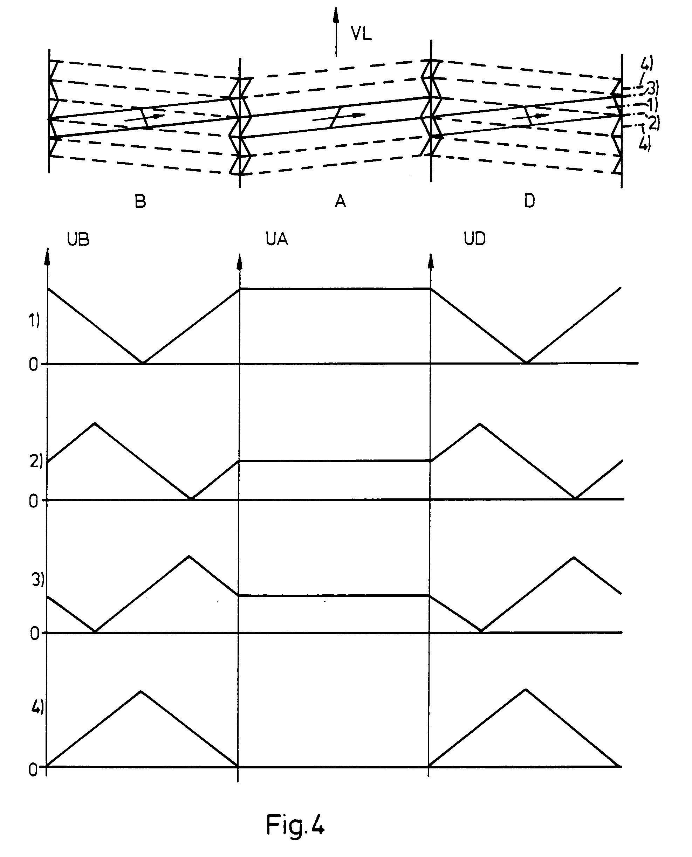

Fig. 4 zeigt, daß die Einhüllende der mit Hilfe der Nachbarköpfe abgetasteten Signale eine ausgezeichnete Spurführungsinformation darstellt. Diese Signalverläufe sind folgendermaßen zu erklären: Wenn sich Kopf A infolge korrekter Kopfraddrehzahl und Hubgeschwindigkeit VL parallel zu den Spuren des in Aufwärtsrichtung geschriebenen mittleren Blockes bewegt, schneiden die Nachbarköpfe die mit entgegengesetzter Hubrichtung geschriebenen Spuren der Nachbarblöcke. Im Fall 1) hat der Kopf A die optimale Spurlage, d.h. er läuft mitten auf der Spur mit dem richtigen Azimutwinkel. Die mit diesem Kopf abgetastete Signalspannung UA erreicht ihren Maximalwert. Die Spuren der Nachbarblöcke sind in diesem Beispiel so angeordnet, daß sich die Nachbarköpfe bei der halben Spurlänge mitten auf einer Spur mit entgegengesetztem Azimutwinkel befinden. Dadurch erhält man bei optimaler Spurführung ein Minimum der durch den Nachbarkopf (B bzw. D) abgetasteten Signalspannung bei der halben Spurlänge.

Die in Fig. 4 oben mit 1) .... 4) bezeichneten Mittellinien stellen verschiedene Spurlagen dar. Zu diesen Spurlagen sind die Signalverläufe für drei benachbarte Köpfe B,A,D in Fig. 4 unten dargestellt. Diese Darstellung gilt für einen Umschlingungswinkel größer 270°, so daß die Spannungsverläufe der Köpfe B und D nicht durch Beendigung des Band/Kopf-Kontaktes verkürzt sind. Es ist ersichtlich, daß das Minimum des durch die Köpfe B oder D abgetasteten Signals je nach Richtung einer Spurabweichung von der Mitte aus in Richtung Anfang oder Ende einer Spur verschoben ist. Im Fall 4 befindet sich der Abtastkopf mitten auf einer Spur mit entgegengesetztem Azimutwinkel. Die abgetastete Signalamplitude ist ein Minimum. Das Minimum des durch die Nachbarköpfe abgetasteten Signals befindet sich am Spuranfang und am Spurende. Bis auf diesen Grenzfall, der keine eindeutige Information liefert und daher z.B. durch eine Spurkennzahl entschieden werden muß, enthält das durch die Nachbarköpfe abgetastete Signal eine zuverlässige und leicht auswertbare Information über die Spurlage. Diese wichtige Information muß nicht wie bei bekannten Aufzeichnungsverfahren mit zusätzlicher Aufzeichnungsfläche, Übertragungszeit oder Verminderung des Störabstandes bei ständig überlagerten Pilotfrequenzen erkauft werden.

Die Gewinnung einer Regelspannung für die Hubbewegung oder die Spurführung kann folgendermaßen durchgeführt werden: Die durch Gleichrichtung gewonnene Spannung UB oder UD, die der Einhüllenden der durch Kopf B bzw. D abgetasteten Signalspannung entspricht, erzeugt einen Impuls, der die Lage des Spannungsminimums markiert. Durch Abtastung einer Sägezahnspannung, deren Periodendauer der Dauer einer Spur entspricht, mit Hilfe des Markierimpulses wird dann die Regelspannung z.B. mit einer Abtast- und Halteschaltung erzeugt. Da die Störungen einer Magnetbandabtastung hauptsächlich in Form von Amplitudenabsenkungen, sogenannten Dropouts, auftreten, kann es zweckmäßig sein, die Spurzuordnung zwischen benachbarten Blöcken B so festzulegen, daä bei den Spannungsverläufen von UB und UD in Fig. 4 die Maxima und Minima vertauscht sind. Dann erfolgt die Kennzeichnung der Spurlage durch ein Spannungsmaximum, dessen Vortäuschung durch eine Störung weniger wahrscheinlich ist.

Da die Spurlage nicht durch die Amplitude einer Pilotfrequenz, sondern durch die zeitliche Lage eines Extremwertes der Signalspannung ermittelt wird, ist das hier beschriebene Verfahren außerordentlich störsicher durchführbar. Durch Störungen verursachte Änderungen der Signalamplitude wirken sich nicht oder nur in verringertem Maße auf die Spurführung aus.

Bei genügend hoher Präzision des Aufzeichnungsgerätes, d.h. wenn vor allem die Hubumkehrvorgänge sehr genau und reproduzierbar durchgeführt werden, kann auf eine Regelung bei der Aufzeichnung völlig verzichtete werden. In Fig. 2 werden sich dann die waagerecht schraffierten Bereiche über die gesamte Hubhöhe, also die gesamte Breite des Magnetbandes erstrecken und die breiten Pfeile, die die Spurregelung bei der Aufzeichnung symbolisieren, entfallen. Dank der hohen Präzision des Laufwerkes würde ein gleichwertiges Spurmuster entstehen, so daß die Abtastung mit dem in Fig. 3 und 4 beschriebenen Verfahren durchführbar ist.

Es besteht auch die Möglichkeit, daß der relative Lage der Spuren aufeinanderfolgender Blöcke nicht genau definiert, aber konstant ist. In diesem Fall kann bei einem kurzen Probelauf die Lage der Extremwerte der aus den Nachbarblöcken abgetasteten Signale für die optimale Spurlage des eigentlichen Abtastkopfes (A) ermittelt und abgespeichert werden. Die Spurregelung beim Abspielvorgang der betreffenden Aufzeichnung erfolgt dann so, daß die ermittelte zeitliche Lage der betreffenden Extremwerte erhalten bleibt. Ein derartiges adaptives Spurführungsverfahren, dürfte bei der herkömmlichen Auswertung des Übersprechen eines Pilotsignals aus der Nachbarspur kaum durchführbar sein, denn die Ermittlung und Einhaltung eines bestimmten Amplitudenverhältnisses ist zu störanfällig und daher ungenau. Dagegen spielt es für die Genauigkeit der Spurregelung keine Rolle, auf welche zeitliche Lage der Extremwert einer Einhüllenden eingestellt ist.

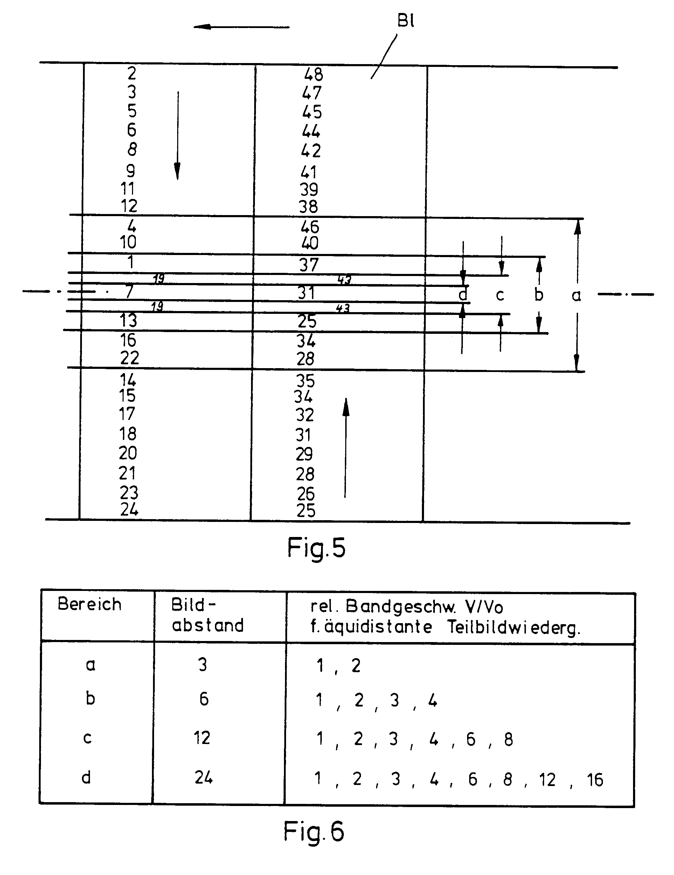

Damit die Abtastung einer Aufzeichnung gemäß Fig. 2 bei erhöhter Bandgeschwindigkeit eine äquidistante Bildwiedergabe ermöglicht, ist eine spezielle Anordnung der Bilder auf dem Band gemäß Fig. 5, ein sogenanntes Bildinterleaving zweckmäßig. Ein derartiges Interleaving ist näher beschrieben in der DE-OS 36 23 341. Je nach Höhe der Bandgeschwindigkeit überstreicht die Hubbewegung der Köpfe bestimmte Teilbereiche eines Blockes, die symmetrisch zur Mitte der Gesamtaufzeichnung liegen. Daher kann die Spurregelung nach dem in Fig. 3 dargestellten Schema erfolgen. Die Regelung kann also bei der Wiedergabe zwischen Spuren benachbarter Blöcke erfolgen, die auch bei der Aufzeichnung durch Regelung miteinander verknüpft waren. Für die praktische Durchführung einer äquidistanten Bildwiedergabe bei erhöhter Bandgeschwindigkeit ist folgendes zu berücksichtigen: Soll z.B. jedes dritte Bild vollständig abgetastet werden, liegt die Bandgeschwindigkeit vorzugsweise unterhalb der dreifachen Nenngeschwindigkeit, da durch die Hubumkehrvorgänge Zeitverluste entstehen.

Eine genau äquidistante Bildwiedergabe ist hier nur bei der Nenngeschwindigkeit VO oder bei der doppelten Nenngeschwindigkeit 2VO des Magnetbandes möglich. Bei Nenngeschwindigkeit wird jedes abgetastete Bild dreimal wiedergegeben. Bei doppelter Nenngeschwindigkeit wird jedes Bild 1,5mal, d.h. in Form von drei Teilbildern (Zeilensprungverfahren) wiedergegeben. In Fig. 6 sind für vier Abtastbereiche, die symmetrisch zur Aufzeichnungsmitte liegen, die möglichen Bandgeschwindigkeiten für äquidistante Teilbildwiedergabe zusammengestellt.

Die Aufzeichnung gemäß Fig. 5 enthält 24 Bilder je Block B. Bei 360 Spuren je Block entfallen auf jedes Bild 15 Spuren. Zwecks Anordnung des Bereiches d symmetrisch zur Aufzeichnungsmitte ist das für den Bereich c zusätzlich erforderliche Bild (Nr. 19 bzw. 43) in zwei Teilbereichen, die symmetrisch zum Bereich d liegen, aufgezeichnet.

Die Bilder Nr. 7 und 19 bzw. 31 und 43 können aber auch normal nebeneinander aufgezeichnet sein, da die Spuren benachbarter Blöcke in der Mitte der Aufzeichnung stets mit genügender Genauigkeit übereinstimmen. Größere Abweichungen im Berich der nicht geregelten Aufzeichnung können erst in größerer Entfernung von dem geregelten Bereich entstehen.

## Patentansprüche

1. Verfahren zur Spurführung bei einem Aufzeichnungs- und Wiedergabegerät innerhalb eines periodisch wiederkehrenden Aufzeichnungsmusters, das aus in Spurrichtung nebeneinanderliegenden Blöcken, die jeweils aus einer Vielzahl von mit entgegengesetztem Azimut aufeinanderfolgenden Spuren gebildet sind, besteht, wobei ein erster Teilbereich eines mit gleichbleibender Hubrichtung eines rotierenden Kopfrades geschriebenen Blockes (B1) mit aus dem Spurmuster des zuvor aufgezeichneten Blockes geregelter Hubbewegung aufgezeichnet wird, **dadurch gekennzeichnet,** daß die Aufzeichnung eines zweiten Teilbereiches, der mit dem ersten Teilbereich einen vollständigen Block bildet, mit freilaufender Hubbewegung erfolgt.

2. Verfahren nach Anspruch 1, **dadurch gekennzeichnet,** daß die Teilbereiche je die Hälfte eines Blockes (Bl) bilden.

3. Verfahren nach Anspruch 1 oder 2, **dadurch gekennzeichnet**, daß Spurführungssignale nur in den Bereichen eines Blockes (Bl) aufgezeichnet werden, die bei der Abtastung von den Nachbarköpfen des jeweils in der Spur geführten Kopfes überstrichen werden (Fig. 3).

4. Verfahren zur Abtastung einer nach den Ansprüchen 1,2 oder 3 durchgeführten Aufzeichnung, **dadurch gekennzeichnet,** daß die Spurführungsinformation für die Abtastung einer Spur aus in den Nachbarblöcken in gleicher Hubhöhe befindlichen Spuren gewonnen wird, wobei jeweils die Spuren verwendet werden, die bei der Aufzeichnung mit der abgetasteten Spur durch Regelung der Hubbewegung verknüpft waren (Fig. 3).

5. Verfahren nach Anspruch 4 oder Verfahren zur Abtastung einer beliebig durchgeführten Aufzeichnung nach Anspruch 9, **dadurch gekennzeichnet**, daß die Spurführungsinformation aus dem aufgezeichneten Spurführungssignal, dem Nutzsignal oder beiden Signalen gewonnen wird.

6. Verfahren nach Anspruch 4 oder 5, **dadurch gekennzeichnet**, daß die Spurführungsinformation aus dem zeitlichen Verlauf der Einhüllenden des aus dem Nachbarblock abgetasteten Signals gewonnen wird.

7. Verfahren nach Anspruch 6, **dadurch gekennzeichnet**, daß die zeitliche Lage des Minimums und/oder des Maximums der Einhüllenden des aus dem Nachbarblock abgetasteten Signals als Maß für die Spurlage dient.

8. Verfahren nach einem oder mehreren der Ansprüche 4 bis 7, **dadurch gekennzeichnet**, daß die Regelung der Spurlage zu Beginn eines Blockes (Bl) aus dem zeitlich vorhergehenden Block erfolgt, gegen Ende des Blockes (Bl) aus dem nachfolgenden Block und im mittleren Bereich des Blockes aus beiden benachbarten Blöcken.

9. Verfahren nach einem oder mehreren der Ansprüche 4 bis 8, **dadurch gekennzeichnet**, daß die Aufzeichnung mit ständig freilaufender Hubbewegung oder nach einem beliebigen anderen Aufzeichnungsverfahren erfolgt.

10. Verfahren nach einem oder mehreren der Ansprüche 4 bis 9, **dadurch gekennzeichnet**, daß vor dem Abspielen einer Aufzeichnung die zeitliche Lage der Einhüllenden der aus den Nachbarspuren abgetasteten Signale für die optimale Spurführung ermittelt und abgespeichert wird, und die Spurführung danach durch Beibehalten dieser zeitlichen Lage erfolgt.

## Claims

1. Method of track-following in a recording and reproduction equipment within a periodically recurring recording pattern which consists of blocks that are adjacent in the direction of the track and are respectively formed from a plurality of successive tracks having opposed azimuth, wherein a first partial region of a block (B1) recorded with a constant direction of traverse of a rotating head wheel is recorded by a sweeping motion that is regulated from the track pattern of the previously recorded block, characterised in that, the recording of a second partial region which forms a complete block with the first partial region is effected with a free running sweeping motion.

2. Method in accordance with Claim 1, characterised in that, the partial regions each form the half of a block (B1).

3. Method in accordance with Claim 1 or 2, characterised in that, track-following signals are only recorded in the regions of a block which are traversed during the scanning by the adjacent heads of the respective head applied to the track (Fig. 3).

4. Method for the scanning of a recording carried out in accordance with Claims 1, 2 or 3, characterised in that, the track-following information for the scanning of a track is obtained from the tracks located in the adjacent blocks at the same sweeping level wherein, on each occasion, the tracks are used which were coupled by regulation of the sweeping motion during the recording with the track being scanned (Fig. 3).

5. Method in accordance with Claim 4, or method for the scanning of an arbitrarily undertaken recording in accordance with Claim 9, characterised in that, the track-following information is obtained from the recorded track-following signal, the useful signal or both signals.

6. Method in accordance with Claim 4 or 5, characterised in that, the track-following information is obtained from the time waveform of the envelopes of the signal scanned from the adjacent block.

7. Method in accordance with Claim 6, characterised in that, the time position of the minimum and/or of the maximum of the envelopes of the signal scanned from the adjacent block serves as a criterion for the position of the track.

8. Method in accordance with one or more of the Claims 4 to 7, characterised in that, the regulation of the track position occurs at the beginning of a block (B1) from the preceding block in time, towards the end of the block (B1) from the succeeding block and in the central region of the block from the two adjacent blocks.

9. Method in accordance with one or more of the Claims 4 to 8, characterised in that, the recording occurs with a constantly free running sweeping motion or in accordance with any other arbitrary recording method.

10. Method in accordance with one or more of the Claims 4 to 9, characterised in that, before the play-back of a recording, the time position of the envelopes of the signals scanned from the adjacent blocks is determined and stored for the optimal track-following and thereafter the track-following occurs by maintaining this time position.

## Revendications

1. Procédé pour le guidage des pistes pour un appareil d'enregistrement et de reproduction à l'intérieur d'une configuration d'enregistrement qui se répète périodiquement qui est constituée par des blocs, situés les uns à côté des autres dans le sens des pistes, qui sont formés respectivement par une multitude de pistes qui se succèdent avec un angle azimutal opposé, une première zone partielle d'un bloc (B1) écrit avec un sens de levée constant d'une roue de têtes rotative est enregistrée avec un mouvement de levée réglé à partir de la configuration des pistes du bloc qui vient d'être enregistré, **caractérisé en ce** que l'enregistrement d'une seconde zone partielle, qui forme un bloc complet avec la première zone partielle, se fait avec un mouvement de levée en roue libre.

2. Procédé selon la revendication 1, **caractérisé en ce** que les zones partielles forment chacune la moitié d'un bloc (B1).

3. Procédé selon la revendication 1 ou 2, **caractérisé en ce** que des signaux de guidage de piste ne sont enregistrés que dans les zones d'un bloc (B1) qui sont balayées, lors du balayage, par les têtes voisines de la tête respectivement guidée sur la piste (figure 3).

4. Procédé pour le balayage d'un enregistrement réalisé selon les revendications 1, 2 ou 3, **caractérisé en ce** que l'information de guidage des pistes pour le balayage d'une piste est obtenue à partir des pistes qui se trouvent dans les blocs voisins à la même hauteur de levée, cependant que ce sont les pistes qui, lors de l'enregistrement, étaient imbriquées avec la piste balayée par réglage du mouvement de levée qui sont respectivement utilisées (figure 3).

5. Procédé selon la revendication 4 ou procédé pour le balayage d'un enregistrement réalisé de manière quelconque selon la revendication 9, **caractérisé en ce** que l'information de guidage des pistes est obtenue à partir du signal de guidage de pistes enregistré, du signal utile ou des deux signaux.

6. Procédé selon la revendication 4 ou 5, **caractérisé en ce** que l'information de guidage de pistes est obtenue à partir de la courbe dans le temps de l'enveloppante du signal balayé à partir du bloc voisin.

7. Procédé selon la revendication 6, **caractérisé en ce** que la position dans le temps du minimum et/ou du maximum de l'enveloppante du signal balayé à partir du bloc voisin sert de mesure à l'empattement des pistes.

8. Procédé selon l'une ou plusieurs des revendications 4 à 7, **caractérisé en ce** que le réglage de l'empattement des pistes se fait au début d'un bloc (B1) à partir du bloc qui précède dans le temps, vers la fin du bloc (B1) à partir du bloc suivant et dans la zone du milieu du bloc à partir des deux blocs voisins.

9. Procédé selon l'une ou plusieurs des revendications 4 à 8, **caractérisé en ce** que l'enregistrement se fait avec un mouvement de levée constamment en roue libre ou selon nimporte quel autre procédé d'enregistrement.

10. Procédé selon l'une ou plusieurs des revendications 4 à 9, **caractérisé en ce** que la position dans le temps de l'enveloppante des signaux balayés à partir des pistes voisines est déterminée et mémorisée avant la lecture d'un enregistrement pour le guidage optimal des pistes et que le guidage des pistes se fait ensuite en conservant cette position dans le temps.
